# EUROPEAN PATENT APPLICATION

(11) **EP 4 737 538 A1**
(43) Date of publication of application: **06.05.2026**
(21) Application number: 25823100.0
(22) Date of filing: 29.06.2025
(51) Int. Cl.: C10G 1/00, C10G 1/10, C10G 25/02, C10G 7/00, B01D 15/36

(54) **METHOD FOR REFINING PYROLYSIS OIL**

(30) Priority: 11.09.2024 KR 20240124333
(71) Applicant: LG Chem, Ltd., Seoul 07336 (KR)
(72) Inventor: NA, Su Jin, Seoul 07796 (KR); AN, Ji Won, Seoul 07796 (KR); LEE, Sang Beom, Seoul 07796 (KR)
(74) Representative: Goddar, Heinz J.
(86) International application number: PCT/KR2025/009157
(87) International publication number: WO 2026/059049

(57) **Abstract**

Provided is a method for refining a pyrolysis oil including: supplying a waste plastic raw material to a pyrolysis reactor to perform pyrolysis, and discharging a gaseous stream produced by the pyrolysis upwards; supplying an upper discharge stream from the pyrolysis reactor to a distillation column, and discharging a pyrolysis oil stream having a decreased content of a heavy oil fraction from the distillation column; and supplying the pyrolysis oil stream to an anion exchange resin column to bring the stream into contact with the anion exchange resin and remove impurities included in the pyrolysis oil stream.

## Description

### [Technical Field]

### CROSS-REFERENCE TO RELATED APPLICATIONS

The present application claims the benefit of priority to Korean Patent Application No. 10-2024-0124333, filed on September 11, 2024, the entire contents of which are incorporated herein as a part of the specification.

### Technical Field

The present invention relates to a method for refining a pyrolysis oil, and more particularly, to a method for removing impurities included in a pyrolysis oil produced from waste plastics.

### [Background Art]

Waste plastics, which are manufactured using petroleum as a raw material, have low recyclability and are mostly disposed of as garbage. Since it takes a long time to decompose these wastes in natural conditions, soil is polluted, and serious environmental pollution is caused.

As a method for recycling the waste plastics, waste plastics are pyrolyzed to be converted into an available oil fraction, and the oil fraction produced therefrom is referred to as a waste plastic pyrolysis oil.

However, since a pyrolysis oil obtained by pyrolyzing waste plastics has a high content of impurities such as nitrogen (N), chlorine (Cl), and silicon (Si) as compared with an oil fraction manufactured from crude oil by a common method, it may not be directly used as a high value-added fuel such as gasoline and diesel oil and should go through a post-treatment process.

As a conventional post-treatment process, a process of hydrogenating a waste plastic pyrolysis oil in the presence of a hydrogenation catalyst to remove chlorine, nitrogen, or other metal impurities is being performed, but in this process, an excessive amount of HCl is produced by a high content of chlorine included in the waste plastic pyrolysis oil, and the HCl causes problems such as equipment corrosion and abnormal reactions and deterioration of product properties. In particular, HCl and a nitrogen compound are reacted to produce an ammonium salt (NH₄Cl), which causes corrosion of a reactor to decrease durability and also causes various process problems such as pressure differential occurrence, reactor clogging, and process efficiency reduction.

Meanwhile, a waste plastic pyrolysis oil is a mixture of hydrocarbon oil fractions having various boiling points and various molecular weight distributions, and since the composition and the reaction activity of impurities in the pyrolysis oil vary depending on the boiling point and the molecular weight distribution properties of the hydrocarbon mixture, the waste plastic pyrolysis oil may not be directly used in the petrochemical industry or field, and a high value addition process such as a separation process by boiling point or a lightening process is performed. Among the hydrocarbon oil fraction mixtures, olefins, in particular, light olefins such as ethylene and propylene are widely used in the petrochemical industry.

As a lightening process for high value addition of the waste plastic pyrolysis oil, a hydrogenation decomposition process is being performed, but since the waste plastic pyrolysis oil has an excessive amount of impurities as compared with crude oil, natural gas, a naphtha fraction, or the like, reaction activity is significantly reduced by the impurities in the hydrogenation decomposition process, a hydrogenation decomposition process should be separately performed apart from a hydrogenation treatment process, and thus, process efficiency is also lowered.

As such, since a pyrolysis oil including many impurities has limitations in its use, in order to use the pyrolysis oil as a petrochemical raw material, impurities in the pyrolysis oil should be removed, and a technology for removing the impurities in the pyrolysis oil without using a post-treatment process such as hydrogenation treatment or hydrogenation decomposition is needed.

### [Disclosure]

### [Technical Problem]

In order to solve the problems mentioned in the Background Art, an object of the present invention is to provide a method for removing impurities in a pyrolysis oil.

That is, the present invention allows flowability even under room temperature and normal pressure conditions by removing a heavy oil fraction in the pyrolysis oil through a distillation column, so that impurities in the pyrolysis oil may be then continuously removed with a small energy usage using an anion exchange resin column.

However, the object to be solved in the present application is not limited to the object mentioned above, and other objects which are not mentioned may be clearly understood by a person skilled in the art from the following descriptions.

### [Technical Solution]

In one general aspect, a method for refining a pyrolysis oil includes: supplying a waste plastic raw material to a pyrolysis reactor to perform pyrolysis, and discharging a gaseous stream produced by the pyrolysis upwards; supplying an upper discharge stream from the pyrolysis reactor to a distillation column, and discharging a pyrolysis oil stream having a decreased content of a heavy oil fraction from the distillation column; and supplying the pyrolysis oil stream to an anion exchange resin column to bring the stream into contact with the anion exchange resin and remove impurities included in the pyrolysis oil stream.

### [Advantageous Effects]

According to the method for refining a pyrolysis oil of the present invention, in removing impurities in a pyrolysis oil using an anion exchange resin, a pyrolysis oil having an adjusted content of a C20+ heavy oil fraction may be added to an anion exchange resin column to continuously remove the impurities at room temperature and normal pressure, impurity removal ability is excellent, and manufacturing costs may be lowered by energy consumption reduction to increase cost competitiveness.

An effect which may be obtained in the present application is not limited to the effects mentioned above, and other effects which are not mentioned will be understood clearly by a person with ordinary skill in the art to which the present invention pertains from the following description.

### [Description of Drawings]

FIG. 1 is a process flow diagram of a method for refining a pyrolysis oil in an exemplary embodiment of the present invention.
FIG. 2 is a process flow diagram of a method for refining a pyrolysis oil according to the comparative example.

### [Best Mode]

The terms and words used in the description and claims of the present invention are not to be construed limitedly as having general or dictionary meanings but are to be construed as having meanings and concepts meeting the technical ideas of the present invention, based on a principle that the inventors are able to appropriately define the concepts of terms in order to describe their own inventions in the best mode.

The meaning of "comprising" or "containing" used herein embodies specific characteristics, domains, integers, steps, actions, elements, or components, and does not exclude the addition of other specific characteristics, domains, integers, steps, actions, elements, or components.

The term "stream" used in the present application may refer to a fluid flow in a process or may refer to a fluid itself flowing in a pipe. Specifically, the stream may refer to both a fluid itself flowing in a pipe connecting each device and a fluid flow. In addition, the fluid may include any one or more components of gas, liquid, and solid.

The term "upper portion" used herein refers to, unless otherwise stated, a height point at 0% to 20% downward from the top of an apparatus, and specifically, may refer to a top (tower top). In addition, the term "lower portion" refers to a point at 80% to 100% of the height measured downward from the top of a device, and specifically, may refer to a bottom (tower bottom). In addition, the term "side cut" refers to a middle portion positioned in a side portion of a device. That is, a component flowing out as the side cut may represent a component flowing out in the middle part excluding the number of trays of the top and bottom parts of a device.

In the present invention, the term "C#" in which "#" is a positive integer represents all hydrocarbons having # carbon atoms. Therefore, the term "C20" represents a hydrocarbon compound having 20 carbon atoms. In addition, the term "C#-" represents all hydrocarbon molecules having # or fewer carbon atoms. Therefore, the term "C20-" represents a mixture of hydrocarbons having 20 or fewer carbon atoms. In addition, the term "C#+" represents all hydrocarbon molecules having # or more carbon atoms. Therefore, the term "C20+" represents a mixture of hydrocarbons having 20 or more carbon atoms.

The term used in the present application such as "1st", "2nd", "first", or "second" may be simply used for distinguishing a corresponding constituent element from other corresponding constituent elements, and the corresponding constituent elements are not limited in other aspects (e.g.: importance or order).

"Pressure" mentioned in the present application refers to gauge pressure measured based on atmospheric pressure.

Unless otherwise defined herein, all terms used in the present specification (including technical and scientific terms) may have the meaning that is commonly understood by those skilled in the art to which the present invention pertains. In addition, the terms defined in a commonly used dictionary are not ideally or excessively interpreted, unless otherwise clearly or particularly defined.

Hereinafter, the present disclosure will be described in more detail with reference to the drawings, for better understanding of the present invention.

According to the present invention, a method for refining a pyrolysis oil including: supplying a waste plastic raw material to a pyrolysis reactor to perform pyrolysis, and discharging a gaseous stream produced by the pyrolysis upwards; supplying an upper discharge stream from the pyrolysis reactor to a distillation column, and discharging a pyrolysis oil stream having a decreased content of a heavy oil fraction from the distillation column; and supplying the pyrolysis oil stream to an anion exchange resin column to bring the stream into contact with the anion exchange resin and remove impurities included in the pyrolysis oil stream is provided.

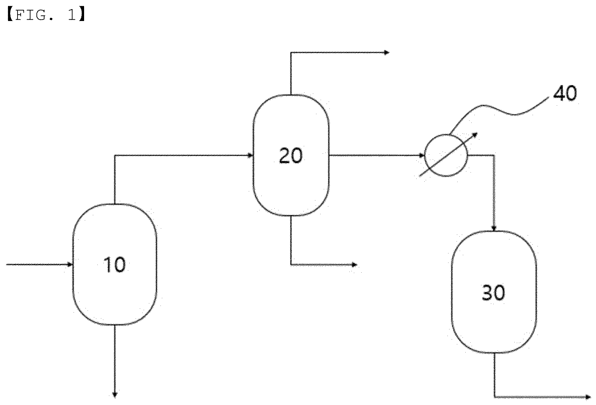

FIG. 1 is a process flow diagram of a method for refining a pyrolysis oil in an exemplary embodiment of the present invention. In FIG. 1, a waste plastic raw material is supplied to a pyrolysis reactor 10 to perform pyrolysis, and a gaseous stream produced by the pyrolysis is discharged upwards. The upper discharge stream from the pyrolysis reactor 10 is supplied to a distillation column 20, and a pyrolysis oil stream having a decreased content of a heavy oil fraction is discharged from the distillation column 20. The pyrolysis oil stream is supplied to an anion exchange resin 30 to bring the stream into contact with an anion exchange resin and remove impurities included in the pyrolysis oil stream.

Hereinafter, the method will be described in detail step by step with reference to FIG. 1.

In an exemplary embodiment of the present invention, the waste plastic raw material may include a natural polymer, a synthetic polymer, or a mixture thereof, and as the synthetic polymer, one or more thermoplastic resins selected from the group consisting of polyethylene (PE) and polypropylene (PP) may be included. In addition, the thermoplastic resin may be mixed with other types of resins such as polystyrene (PS), polyvinyl chloride (PVC), polyethylene terephthalate (PET), and polybutylene terephthalate (PBT). For example, the waste plastic raw material may be a thermoplastic resin having a combined content of polyethylene (PE) and polypropylene (PP) of 80 wt% or more and including less than 20 wt% of any one or more of PET and PVC, based on the total amount of the waste plastic raw material.

The waste plastic of this material may undergo a pretreatment process including shredding, washing, drying, melting, and the like, after collecting and sorting. The pretreatment process may be performed by a method common in the art.

For example, the shredded size of the waste plastic is not particularly limited, but may be in a range of 0.5 to 6.0 cm, and then the shredded waste plastic after being washed and dried may be added to a tubular melter such as an extruder and melted. The extruder has a function of melting, kneading, and extruding, and may be, for example, a twinscrew extruder. When the waste plastic is a thermoplastic resin, for example, polyethylene, polypropylene, or a mixture thereof, a melting temperature may be 120°C to 350°C or 150°C to 250°C, but is not limited thereto.

In order to pyrolyze the shredded waste plastic or the molten waste plastic as the waste plastic raw material, it may be supplied to a pyrolysis reactor 10.

In an exemplary embodiment of the present invention, the pyrolysis reactor 10 may be a stirred tank reactor provided with an agitator, the agitator is not particularly limited as long as it may sufficiently stir the waste plastic raw material supplied as the raw material and may be, for example, a helical ribbon type or anchor type, and it is advantageous to maintain a distance from the inner wall of the reactor at about 5 mm to 1 cm for maximizing stirring of the waste plastic raw material and heat transfer through the reactor wall. In addition, the pyrolysis reactor 10 may be operated by either a batch type or a continuous type. Further, in the pyrolysis reactor, nitrogen purging may be performed for maintaining an anaerobic or hypoxic atmosphere while performing the pyrolysis reaction of the waste plastic raw material.

The waste plastic raw material is supplied to the pyrolysis reactor 10 provided with the agitator, and heating is performed while operating the agitator to perform the pyrolysis of the waste plastic raw material.

The heating of the waste plastic raw material may be performed by passing high temperature/high pressure steam, hot water, or heat transfer fluid through a jacket provided outside the pyrolysis reactor to transfer high temperature heat to the waste plastic raw material, and there is no particular limitation thereon.

The pyrolysis reactor 10 may stably and efficiently perform pyrolysis under a non-oxidizing atmosphere, that is, an atmosphere where the waste plastic is not oxidized (burned).

The pyrolysis reactor 10 may be operated under the conditions of 400°C or higher and 500°C or lower. As a specific example, the pyrolysis reactor 10 may be operated under the conditions of 400°C or higher and 450°C or lower. In addition, the pyrolysis reactor 10 may be operated under the pressure condition of normal pressure or higher. When the pyrolysis reactor 10 is operated under the conditions described above, sufficient pyrolysis may proceed at a sufficient speed, and excessive production of solid carbides such as char due to a high temperature may be prevented.

When the waste plastic of solid components is supplied to the pyrolysis reactor 10 to perform pyrolysis, among the waste plastic raw materials, C1 to C2 gas components, C5 to C12 light hydrocarbons such as naphtha, and longer chain hydrocarbons are vaporized and discharged as an upper discharge stream from the pyrolysis reactor 10, and liquid components which have not been vaporized yet or high viscosity residual wax such as char are discharged to the lower portion of the pyrolysis reactor 10.

Gaseous components produced by the pyrolysis include a hydrocarbon oil fraction mixture having various molecular weight distributions, and among them, a heavy oil fraction is included. The heavy oil fraction refers to a hydrocarbon mixture which is not dissolved in water or has a relatively high boiling point during a reaction process or transport process, and for example, it refers to a C20+ wax component having a high molecular weight. However, it is only an example, and the standard of the heavy oil fraction may vary depending on the environment for separation and removal such as the production conditions or use environment of pyrolysis oil. When the pyrolysis oil, which is refined by performing a refining process in an anion exchange resin column 30 in a state of including the heavy oil fraction as it is, is recovered, operation may be difficult due to column occlusion or difficulties in transport, and the content of the heavy oil fraction in the refined pyrolysis oil is high, so that it may be difficult to realize high value addition of the waste plastic pyrolysis oil.

Thus, in the present invention, the upper discharge stream from the pyrolysis reactor 10 may be supplied to a distillation column 20 to separate the upper discharge stream from the pyrolysis reactor 10 by components depending on the boiling point. Specifically, a stream including a C20+ heavy oil fraction may be separated and discharged to the lower portion of the distillation column 20, a stream including C1 to C4 gas components may be separated and discharged to the upper portion of the distillation column 20, and a stream including a C4 to C25 middle oil fraction may be separated and discharged to a side cut of the distillation column 20. The middle oil fraction may be separated and discharged to 1 to 3 side cuts, if necessary. Herein, the stream including the middle oil fraction may be supplied to an anion exchange resin column 30 as a pyrolysis oil stream.

The distillation column 20 may have a multi-tray structure of 10 to 50 trays, in which the temperature gradually decreases as the number of t rays increases, and hydrocarbon components having a relatively high boiling point may be separated at the tray positioned in the lower portion, hydrocarbon components having a relatively low boiling point may be separated at the tray positioned in the upper portion, and hydrocarbon components showing a relatively middle boiling point may be separated between those trays.

If necessary, steam produced by heating in the distillation column 20 moves to the upper portion of the column and is discharged, and the discharged steam may be partially or completely condensed in a condenser connected to the upper portion of the column. A part of the condensate may be recirculated into the column.

In the distillation column 20, the heavy oil fraction, the light oil fraction, and the middle oil fraction may be separated, and the middle oil fraction is supplied as a pyrolysis oil stream to the anion exchange resin column 30 to remove impurities, so that the pyrolysis oil stream in the anion exchange resin of the anion exchange resin column 30 may have sufficient flowability even under room temperature and normal pressure conditions, and the impurities may be effectively removed to facilitate the use of the refined pyrolysis oil.

The heavy oil fraction may have a C20+ content of 15 wt% to 100 wt%, and the light oil fraction may have a C1 to C4 content of 50 wt% to 100 wt%. In addition, the middle oil fraction may have a C1 to C4 content of 0 wt% to 10 wt%, 1 wt% to 8 wt%, or 1 wt% to 5 wt%, and a C20+ middle oil fraction content of less than 40 wt%, less than 30 wt%, 1 wt% to 25 wt%, or 5 wt% to 20 wt%, based on the total amount of the middle oil fraction. When the stream including the middle oil fraction of the composition is supplied as a pyrolysis oil stream to the anion exchange resin column 30 to remove impurities, a separate heating device for maintaining flowability is not required, and the anion exchange resin column may be operated in high removal performance. In addition, even when the middle oil fraction is stored in a pyrolysis oil tank without continuously supplying the middle oil fraction to the anion exchange resin column 30 in the distillation column 20 and then supplied to the anion exchange resin column 30, the anion exchange resin column may be operated without a separate heating device.

The distillation column may be operated under normal pressure and pressurized conditions. As a specific example, the distillation column 20 may be operated under the conditions of 0 barg or more and less than 10 barg or 0 barg or more and less than 5 barg. The operating temperature of the distillation column may be 400°C or lower for preventing additional pyrolysis. When the distillation column 20 is operated under the conditions described above, the heavy oil fraction, the light oil fraction, and the middle oil fraction may be effectively separated, and the C20+ content in the middle oil fraction may be controlled to a desired level or lower.

The carbon range of the pyrolysis oil stream to be desired may be changed by adjusting the upper operating temperature of the distillation column 20. Specifically, when the upper operating temperature of the distillation column 20 is raised, the carbon range of the pyrolysis oil may move to a higher boiling point, and when the upper operating temperature of the distillation column 20 is lowered, the carbon range of the pyrolysis oil may move to a lower boiling point. For example, the upper operating temperature of the distillation column 20 is adjusted to 30°C to 50°C, the middle oil fraction having the composition described above may be discharged as a side cut of the distillation column 20.

In an exemplary embodiment of the present invention, the pyrolysis oil stream is cooled to 40°C or lower through a heat exchanger 40 and the light oil fraction may be sufficiently condensed and supplied to the anion exchange resin column 30. The type of heat exchanger 40 is not particularly limited and may be shell and tube, double tube, plate type, or the like, and may use a refrigerant commonly used in a chemical process, such as cooling water and chilled water, as a cooling refrigerant.

In an exemplary embodiment of the present invention, the anion exchange resin column 30 may be operated at a temperature of 20°C or higher, 20°C to 40°C, 20°C to 35°C, or 20°C to 30°C under a pressure of 0 barg or more, 0 barg to 3 barg, 0 barg to 2 barg, or 0 barg to 1 barg. Though the anion exchange resin column 30 is operated under the operating conditions within the range described above, the flowability of the pyrolysis oil stream is good, and the impurities in the pyrolysis oil stream may be effectively removed while reducing energy.

Meanwhile, when a C20+ heavy oil fraction is included in a large amount in the pyrolysis oil stream, the pyrolysis oil stream should be heated to a high temperature in order to impart flowability in the anion exchange resin column 30, but much energy for heating is consumed in this case, and due to the characteristic in which when the adsorption temperature of the anion exchange resin is raised, adsorption equilibrium capacity is lowered, it is difficult to effectively remove impurities in the pyrolysis oil stream at a high temperature.

The anion exchange resin filling the inside of the anion exchange resin column 30 may be a resin including any one or more exchange groups selected from the group consisting of a primary amine group, a secondary amine group, a tertiary amine group, and a quaternary ammonium group. For example, the anion exchange resin may be one or more selected from styrene-based resins and acryl-based resins including any one or more exchange groups selected from the group consisting of a primary amine group, a secondary amine group, a tertiary amine group, and a quaternary ammonium group.

As a specific example, the anion exchange resin may be a styrene-based resin including a primary amine group as an exchange group, and as a more specific example, the primary benzylamine may include benzylamine, 2-chlorobenzylamine, 3-chlorobenzylamine, 4-chlorobenzylamine, 2-fluorobenzylamine, 3-fluorobenzylamine, 4-fluorobenzylamine, 2,4-dichlorobenzylamine, 3,4-dichlorobenzylamine, 2,6-dichlorobenzylamine, 2,4-difluorobenzylamine, 3,4-difluorobenzylamine, 2,6-difluorobenzylamine, 4-methylbenzylamine, 4-ethylbenzylamine, 2,4-dimethylbenzylamine, 4-t-butylbenzylamine, or 3-methoxybenzylamine, but is not limited thereto.

As a specific example, the anion exchange resin may be a styrene-based resin including a quaternary ammonium group as an exchange group, and as a more specific example, may include a reactive group in a hydroxide form.

An average particle diameter (D50) may be measured, for example, using a laser diffraction method or a scanning electron micrograph (SEM), and the average particle diameter (D50) of the particles may be defined as a particle diameter at a 50% standard of the particle diameter distribution (particle diameter corresponding to 50% of the volume accumulation of the particle size distribution).

A weight ratio between the anion exchange resin and the pyrolysis oil having a decreased content of the heavy oil fraction in the anion exchange resin column 30 may be 1:1 or more, 1:1 to 1:5, 1:1 to 1:4, 1:1 to 1:3, or 1:2 to 1:3. By maintaining the weight ratio between the anion exchange resin and the pyrolysis oil in the anion exchange resin column 30 within the range described above, impurities in the pyrolysis oil stream may be effectively removed at a level which does not increase costs excessively.

The impurities may include one or more selected from the group consisting of chlorine (Cl), nitrogen (N), and silicon (Si). When the pyrolysis oil is refined by the method according to the present invention, the content of chlorine in the refined pyrolysis oil may be 300 mg/kg to 950 mg/kg, 500 mg/kg to 900 mg/kg, or 600 mg/kg to 880 mg/kg. In addition, the content of nitrogen in the refined pyrolysis oil may be 100 mg/kg to 3000 mg/kg, 200 mg/kg to 700 mg/kg, or 300 mg/kg to 600 mg/kg. In addition, the content of silicon in the refined pyrolysis oil may be 10 mg/kg to 400 mg/kg, 50 mg/kg to 400 mg/kg, or 100 mg/kg to 400 mg/kg.

The pyrolysis oil refined as such may be used as a raw material of the petrochemical process, decrease greenhouse gas emissions caused by supply, promote process efficiency improvement such as reduced energy consumption, and promote resource virtuous circulation through waste plastic treatment.

Hereinabove, the method of refining a pyrolysis oil according to the present invention has been described and illustrated in the drawings; however, the description and the illustration in the drawings are the description and the illustration of only core constitutions for understanding of the present invention, and in addition to the process and apparatus described above and illustrated in the drawings, the process and the apparatus which are not described and illustrated separately may be appropriately applied and used for carrying out the method for refining a pyrolysis oil according to the present invention.

Hereinafter, the present invention will be described in more detail by the examples. However, the following examples are provided for illustrating the present invention, and it is apparent to a person skilled in the art that various modifications and alterations may be made without departing from the scope and spirit of the present invention, and the scope of the present invention is not limited thereto.

### [Examples]

### Example 1

Household wastes having a total content of PE and PP of 80 wt% or more as a waste plastic raw material were supplied to a pyrolysis reactor 10 and pyrolyzed under the condition of 430°C to produce a gaseous stream which was discharged upwards. The upper discharge stream from the pyrolysis reactor 10 was supplied to a distillation column 20 and heated to 400°C to separate and discharge a stream including a C20+ heavy oil fraction, a stream including a C1 to C4 light oil fraction, and a C4 to C25 middle oil fraction.

The middle oil fraction stream including a part of the C20+ heavy oil fraction was passed through a heat exchanger 40 and cooled to 40°C or lower and then supplied to an anion exchange resin column 30. Herein, the content of the C20+ heavy oil fraction in the middle oil fraction stream was measured as 15 wt%.

In the anion exchange resin column 30, the styrene resin including the primary amine group was used as the anion exchange resin, and the column was operated under the conditions of a temperature of 20°C and a pressure of 0 barg. A middle oil fraction stream including a part of the condensed C20+ heavy oil fraction was passed through an anion exchange resin to remove impurities. A weight ratio between an anion exchange resin and a middle oil fraction stream including a part of the C20+ heavy oil fraction in the anion exchange resin was adjusted to 1:1.3.

A refined pyrolysis oil was obtained from the middle oil fraction stream including a part of the C20+ heavy oil fraction passed through the anion exchange resin.

### Example 2

A refined pyrolysis oil was obtained in the same manner as in Example 1, except that a styrene resin including a quaternary ammonium group in a hydroxide form was used as an anion exchange resin.

### Example 3

A refined pyrolysis oil was obtained in the same manner as in Example 1, except that the weight ratio between the anion exchange resin and a stream including a C4 to C25 middle oil fraction was adjusted to 1:3.

### [Comparative Examples]

### Comparative Example 1

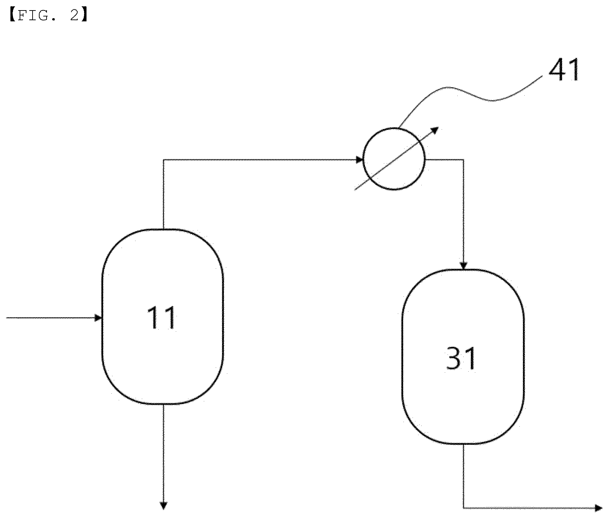

FIG. 2 is a process flow diagram of a method for refining a pyrolysis oil according to Comparative Example 1.

Specifically, household wastes containing 80 wt% of PE and PP as a waste plastic raw material were supplied to a pyrolysis reactor 10, pyrolyzed under the condition of 430°C, and passed through a heat exchanger 41 to be cooled to 40°C or lower, and an oil fraction excluding a stream including an uncondensed C1 to C4 light oil fraction was supplied to the anion exchange resin column 31 without separate separation. Herein, the content of the C20+ heavy oil fraction in the stream supplied to the anion exchange resin column 31 was measured as 49 wt%.

In the anion exchange resin column 31, a styrene resin having a primary amine as a functional group was used, and the column was operated under the conditions of a temperature of 20°C and a pressure of 0 barg. The upper discharge stream from the condensed pyrolysis reactor 11 was passed through an anion exchange resin to remove impurities. A weight ratio between the anion exchange resin and the upper discharge stream from the pyrolysis reactor 11 in the anion exchange resin was adjusted to 1:1.3.

In this case, since the content of the C20+ heavy oil fraction in the upper discharge stream of the pyrolysis reactor 11 was high, the resin and the oil fraction were not separated well due to a flowability problem and operation was difficult.

### Comparative Example 2

A refined pyrolysis oil was obtained from the upper discharge stream from the pyrolysis reactor 11, which was passed through the anion exchange resin, in the same manner as in Comparative Example 1, except that the anion exchange resin column 31 was operated at a temperature of 60°C and a pressure of 2 barg.

### [Experimental Examples]

### Experimental Example 1

Contents of impurities in the pyrolysis oil stream before and after treatment with an anion exchange resin in the anion exchange resin column in Examples 1 to 3 and Comparative Examples 1 and 2 were measured, and the results are shown in the following Table 1.

**[Table 1]**

| | | Content (mg/kg) | | |
|---|---|---|---|---|
| | | Cl | N | Si |
| Example 1 | Before treatment with anion exchange resin | 1, 780 | 1,040 | 220 |
| | After treatment with anion exchange resin | 860 | 570 | 170 |
| Example 2 | Before treatment with anion exchange resin | 1, 780 | 1,040 | 220 |
| | After treatment with anion exchange resin | 260 | 350 | 160 |
| Example 3 | Before treatment with anion exchange resin | 870 | 2,730 | 210 |
| | After treatment with anion exchange resin | 160 | 140 | 130 |
| Comparative Example 1 | Before treatment with anion exchange resin | 820 | 2,500 | 350 |
| | After treatment with anion exchange resin | - | - | - |
| Comparative Example 2 | Before treatment with anion exchange resin | 400 | 1,870 | 210 |
| | After treatment with anion exchange resin | 150 | 1,390 | 200 |

Referring to Table 1, it was confirmed that when the pyrolysis oil was refined by the methods according to Examples 1 to 3, a pyrolysis oil stream having a content of the heavy oil fraction decreased in the distillation column was supplied to the anion exchange resin column to remove impurities contained in the pyrolysis oil stream, thereby having flowability to allow operation of the anion exchange resin column under the conditions of room temperature and normal pressure, so that energy consumption was reduced and impurity removal ability was excellent.

In particular, it was confirmed that when the weight ratio between the anion exchange resin and the stream including the C4 to C25 middle oil fraction was adjusted to 1:1 to 1:3, an excessive increase in costs was prevented, and the impurity removal ability in the anion exchange resin tower was better, and when a styrene resin including a quaternary ammonium group in a hydroxide form was used as the anion exchange resin, impurity removal ability was better, as compared with using a styrene resin including a primary amine group.

However, in Comparative Example 1, the content of the C20+ heavy oil fraction in the upper discharge stream of the pyrolysis reactor was high, and it was difficult to operate the anion exchange resin column due to a flowability problem, so that it was difficult to measure the content of impurities after the anion exchange resin treatment.

In addition, in Comparative Example 2, it was confirmed that flowability was imparted to the upper discharge stream of the pyrolysis reactor having a high content of the C20+ heavy oil fraction to allow operation, but the anion exchange resin column was operated under the conditions of high temperature and high pressure, so that much energy was consumed and impurity removal ability was reduced.

Hereinabove, the exemplary embodiments of the present invention have been described, but the present invention is not limited thereto, and those with ordinary skill in the art will understand that various changes and modification are possible within the range which is not out of the concept and the scope of the claims described later.

### [Reference signs list]

10, 11: Pyrolysis reactor
20: Distillation column
30, 31: Anion exchange resin column
40, 41: Heat exchanger

## Claims

1. A method for refining a pyrolysis oil, the method comprising:
supplying a waste plastic raw material to a pyrolysis reactor to perform pyrolysis, and discharging a gaseous stream produced by the pyrolysis upwards;
supplying an upper discharge stream from the pyrolysis reactor to a distillation column, and discharging a pyrolysis oil stream having a decreased content of a heavy oil fraction from the distillation column; and
supplying the pyrolysis oil stream to an anion exchange resin column to bring the stream into contact with the anion exchange resin and remove impurities included in the pyrolysis oil stream.

2. The method for refining a pyrolysis oil of claim 1, wherein the waste plastic raw material is a mixture including one or more selected from the group consisting of polyethylene (PE) and polypropylene (PP).

3. The method for refining a pyrolysis oil of claim 1, wherein an operating temperature of the pyrolysis reactor is 400°C to 500°C.

4. The method for refining a pyrolysis oil of claim 1, wherein an upper operating temperature of the distillation column is 30°C to 50°C.

5. The method for refining a pyrolysis oil of claim 1,
wherein in the distillation column, the upper discharge stream from the pyrolysis reactor is separated into a stream including a C20+ heavy oil fraction, a stream including a C1 to C4 light oil fraction, and a stream including a C4 to C25 middle oil fraction depending on their boiling points and discharged, and
the pyrolysis oil stream is the stream including the middle oil fraction.

6. The method for refining a pyrolysis oil of claim 1, wherein a content of the heavy oil fraction included in the pyrolysis oil stream is less than 40 wt%.

7. The method for refining a pyrolysis oil of claim 1, wherein the pyrolysis oil stream is cooled to 40°C or lower through a heat exchanger and then supplied to the anion exchange resin column.

8. The method for refining a pyrolysis oil of claim 1, wherein the anion exchange resin column is operated at a temperature of 20°C or higher and a pressure of 0 barg or more.

9. The method for refining a pyrolysis oil of claim 1, wherein the anion exchange resin filling the inside of the anion exchange resin column is a resin including any one or more exchange groups selected from the group consisting of a primary amine group, a secondary amine group, a tertiary amine group, and a quaternary ammonium group.

10. The method for refining a pyrolysis oil of claim 9, wherein the anion exchange resin is any one or more resins selected from styrene-based resins and acryl-based resins.

11. The method for refining a pyrolysis oil of claim 1, wherein a weight ratio between the anion exchange resin and the pyrolysis oil in the anion exchange resin column is 1:1 or more.

12. The method for refining a pyrolysis oil of claim 1, wherein the impurities include one or more selected from the group consisting of nitrogen (N), chlorine (Cl), and silicon (Si) .
